# FASCICULE DE BREVET EUROPEEN

(11) **EP 2 507 590 B1**
(45) Date de publication et mention de la délivrance du brevet: **25.03.2020**
(21) Numéro de dépôt: 10787289.7
(22) Date de dépôt: 25.11.2010
(51) Int. Cl.: G01C 23/00, G06F 3/147

(54) **DISPOSITIF D'AFFICHAGE D'INFORMATIONS CRITIQUES ET NON CRITIQUES, ET AERONEF INCORPORANT UN TEL DISPOSITIF**
VORRICHTUNG ZUR ANZEIGE VON KRITISCHEN UND UNKRITISCHEN INFORMATIONEN SOWIE FLUGZEUG MIT EINER DERARTIGEN VORRICHTUNG
DEVICE FOR DISPLAYING CRITICAL AND NON-CRITICAL INFORMATION, AND AIRCRAFT INCLUDING SUCH A DEVICE

(30) Priorité: 01.12.2009 FR 0905782
(43) Date de publication de la demande: 10.10.2012
(73) Titulaire: Safran Electronics & Defense, 92100 Boulogne-Billancourt (FR)
(72) Inventeur: GUILLOT, Francois, 92100 BOULOGNE-BILLANCOURT (FR); PIERSON, Jérôme, 92100 BOULOGNE-BILLANCOURT (FR); COPPEE, Pascal, 92100 BOULOGNE-BILLANCOURT (FR); VANDENBAVIERE, Yann, 92100 BOULOGNE-BILLANCOURT (FR)
(74) Mandataire: Lavialle, Bruno François Stéphane
(86) Numéro de dépôt international: PCT/EP2010/007143
(87) Numéro de publication internationale: WO 2011/066920

(56) Documents cités:
- EP-A2- 1 783 725
- EP-A2- 1 912 202
- WO-A2-2008/106316
- FR-A1- 2 919 951
- US-A1- 2004 046 712
- US-A1- 2009 157 914
- David Allen: Boeing aeromagazine, 10 octobre 2006 (2006-10-10), XP002496643, Extrait de l'Internet: URL:http://web.archive.org/web/20061010202 846/http://www.boeing.com/commercial/aerom agazine/aero_23/EFB_story.html [extrait le 2008-09-22]

## Description

La présente invention concerne un dispositif pour l'affichage d'informations critiques et d'informations non critiques.

Les informations critiques sont les informations dont la connaissance est indispensable pour le pilotage de l'aéronef et qui, si elles sont erronées, peuvent directement conduire à la perte de l'aéronef. Les principales informations critiques sont la vitesse et l'altitude. Pour cette raison, le dispositif d'affichage des données critiques est donc lui-même un élément critique dont l'utilisation à bord d'un aéronef est précédée d'une procédure de qualification, ou certification, comportant des tests poussés visant à démontrer la robustesse, la précision et la fiabilité du dispositif d'affichage en toute circonstance. La conception et la fabrication d'un tel dispositif d'affichage sont pour ces raisons coûteuses.

Pour apporter plus de confort à l'équipage, il est connu d'afficher dans le cockpit des informations qui sont utiles sans toutefois être critiques. Ces informations comprennent par exemple les températures intérieure et extérieure, des données horaires, des données se rapportant au fonctionnement d'éléments de l'aéronef, des données de navigation et autres informations de ce type. Le dispositif d'affichage de ces informations peut être un dispositif d'affichage lui-même non critique ou bien le dispositif d'affichage critique.

Il est ainsi connu du document WO-A-2008/106316 une solution partager un afficheur d'aéronef à partir d' un processeur maître et d'un processeur esclave.

Il est désormais envisagé d'afficher également des informations non critiques relativement complexes telles que des informations cartographiques et plus particulièrement des images dites de rendu terrain représentant en trois dimensions la zone de la surface terrestre survolée par l'aéronef. L'affichage des images de rendu terrain nécessite deux bases de données, à savoir : une base de données d'altitudes contenant les altitudes des différents points d'un territoire qui sont déterminés en fonction d'un maillage de ce territoire et une base de données photographiques contenant des photographies aériennes des zones entourant ces différents points du territoire selon le même maillage. Les images de rendu terrain sont réalisées en plaquant les photographies sur le relief extrait de la base de données d'altitudes. Cette opération est particulièrement gourmande en calculs et demande des ressources informatiques importantes, et ce d'autant plus lorsque l'on souhaite un affichage en temps réel de ces images avec une fréquence de rafraîchissement comprise entre 25 et 100 Hz.

Les dispositifs d'affichage critiques n'ont pas une puissance suffisante pour effectuer ces calculs et les développements nécessaires pour concevoir un dispositif d'affichage critique adapté à l'affichage de telles informations seraient tellement importants, notamment en termes d'essais de qualification, qu'un tel dispositif d'affichage critique est considéré comme totalement irréaliste.

Il serait donc nécessaire de recourir à un dispositif d'affichage non critique grand public commercialisé dans des volumes suffisants pour justifier les coûts de développements. En revanche, il serait là encore trop coûteux de mener des essais de qualification sur de tels dispositifs d'affichage.

L'affichage simultané d'informations critiques et d'informations non critiques passe donc par l'utilisation d'un dispositif d'affichage critique et d'un dispositif d'affichage non critique de sorte que les informations critiques et non critiques sont affichées sur deux écrans différents. Comme les informations non critiques sont en général présentées de manière plus attractive visuellement que les informations critiques, il existe un risque que l'attention du pilote soit monopolisée par les informations non critiques au point qu'il ne surveille pas avec toute l'attention nécessaire les informations critiques et ce d'autant plus que les images de rendu terrain peuvent se substituer en partie, du point de vue de l'information véhiculée, à l'affichage brut de l'altitude.

Un but de l'invention est de remédier aux inconvénients précités à un coût raisonnable.

A cet effet, on prévoit, selon l'invention, un dispositif d'affichage d'informations selon la revendication 1.

Ainsi, les informations traitées par la première unité de traitement sont affichées dans une image élaborée à partir des informations traitées par la deuxième unité de traitement. Les informations critiques que sont l'altitude et la vitesse de l'aéronef seront donc incorporées dans les images de rendu terrain. Le regard d'un utilisateur faisant face à l'afficheur embrasse donc les deux types d'informations simultanément. Le calculateur de la première unité de traitement réalise une opération ne nécessitant que de faibles ressources de calcul, à savoir incorporer des informations dans une image déjà calculée par le calculateur de la deuxième unité de traitement et commander l'affichage de l'image modifiée. Le calculateur de la première unité de traitement peut donc être un calculateur critique qui va garder un contrôle total sur l'affichage des informations qu'il traite en direct et qui peut dès lors fournir des informations critiques. Le calculateur de la deuxième unité de traitement n'a pas besoin d'être critique et peut être un calculateur standard, voire grand public.

Selon une caractéristique particulière, la première unité de traitement est également reliée à la base de données d'altitudes pour vérifier une cohérence de l'image fournie par la deuxième unité de traitement et des informations issues de la base de données d'altitudes, le calculateur de la première unité de traitement étant de préférence agencé pour créer une image simplifiée de relief à partir des informations de la base de données d'altitudes et pour comparer l'image simplifiée et l'image transmise par la deuxième unité de traitement pour vérifier la cohérence des deux images, et le calculateur de la première unité de traitement étant, avantageusement, agencé pour, en cas d'incohérence, commander l'affichage des données de vol seules ou incorporées dans l'image simplifiée.

Ainsi, la première unité de traitement vérifie la véracité des informations fournies par la deuxième unité de traitement de manière à identifier une défaillance éventuelle de cette dernière qui entraînerait une altération des informations. La première unité de traitement, en cas d'incohérence, peut être agencée pour émettre une alerte, empêcher l'affichage de l'image fournie par la deuxième unité de traitement en affichant seulement les informations qu'elle a elle-même reçues ou ses informations incorporées dans l'image simplifiée qu'elle a elle-même établie.

L'invention a également pour objet un aéronef équipé d'un tel dispositif d'affichage.

D'autres caractéristiques et avantages de l'invention ressortiront à la lecture de la description qui suit de modes de réalisation particuliers non limitatifs de l'invention.

Il sera fait référence aux dessins annexés, parmi lesquels :

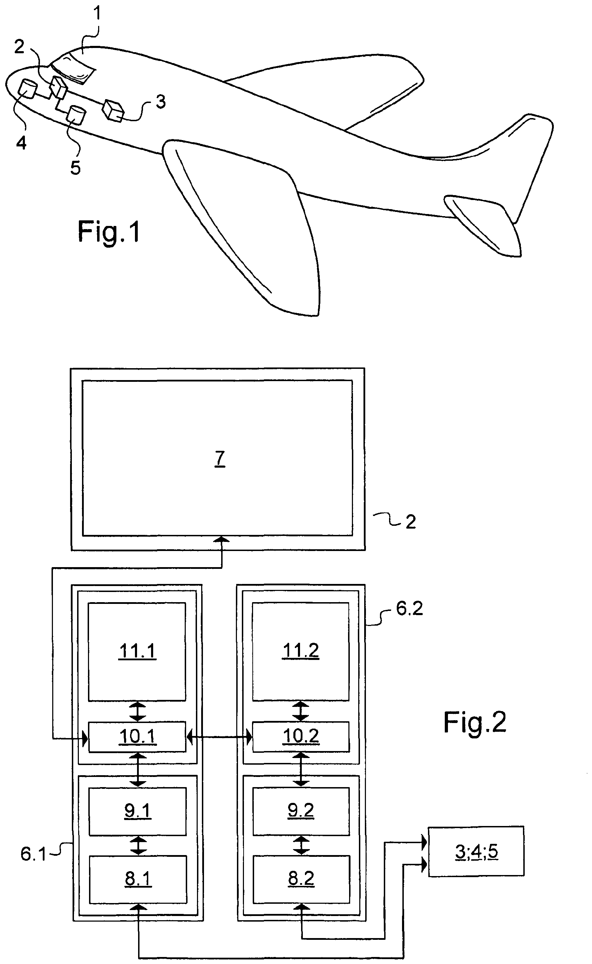

- la figure 1 est une vue schématique d'un aéronef équipé d'un dispositif d'affichage conforme à l'invention,
- la figure 2 est une vue schématique de ce dispositif.

L'invention est ici décrite en application à l'affichage simultané de l'altitude et de la vitesse de l'aéronef avec des images de rendu terrain.

En référence aux figures, l'aéronef, ici un avion, comporte un cockpit 1 dans lequel est disposé un dispositif d'affichage 2, une centrale de navigation 3 fournissant notamment la vitesse et l'altitude de l'avion, une base de données d'altitudes 4 contenant les coordonnées des points d'un maillage du territoire survolé par l'avion et les altitudes associées à chaque point de ce maillage, une base de données photographiques 5 contenant les coordonnées des points de ce même maillage du territoire survolé par l'avion et des photographies aériennes associées à ces points.

Le dispositif de commande 2 comprend une première unité de traitement 6.1, une deuxième unité de traitement 6.2 et un afficheur 7.

La première unité de traitement 6.1 comprend une interface de liaison 8.1 reliée, d'une part, à la centrale 3 et à la base de données d'altitudes 4 et, d'autre part, à un calculateur 9.1 associé à un automate 10.1 assurant une fonction d'échange de données et à une mémoire 11.1.

La deuxième unité de traitement 6.2 comprend une interface de liaison 8.2 reliée, d'une part, à la base de données photographiques 5 et à la base de données d'altitudes 4 et, d'autre part, à un calculateur 9.2 associé à un contrôleur graphique 10.2 et à une mémoire 11.2.

Le contrôleur graphique 10.2 est relié à l'automate 10.1 par une liaison de type DVID.

Le calculateur 9.2 est agencé pour créer des images de rendu terrain à partir des informations issues de la base de données photographiques 5 et à la base de données d'altitudes 4. Le procédé de création des images de rendu terrain est connu en lui-même et consiste grossièrement à, à partir de la localisation de l'avion fournie par exemple par la centrale de navigation :
- extraire des bases de données les altitudes et les photographies correspondant à la zone survolée,
- élaborer à partir des altitudes une représentation du relief de ladite zone,
- plaquer sur ladite représentation les photographies.

Les images de rendu terrain sont ensuite transmises par le contrôleur graphique 10.2 à l'automate 10.1 qui les enregistre dans la mémoire 11.1. L'automate reçoit en fait une description brute de ce qu'il doit afficher sur l'afficheur et l'enregistre dans un plan de la mémoire 11.1 (adressage bit à bit du contenu de l'image de rendu terrain dans la mémoire 11.1).

Le calculateur 9.1 est programmé pour modifier chaque image de rendu terrain en y incorporant la vitesse et l'altitude de l'avion fournies par la centrale de navigation 3. Certaines zones du plan contenant l'image à modifier sont ainsi remplacées par l'inscription de la vitesse et de l'altitude. Les informations de vitesse et d'altitude peuvent être incorporées en surimpression de l'image de rendu terrain ou dans une fenêtre dédiée ménagée dans l'image de rendu terrain.

Une fois la modification terminée, le calculateur 9.1 commande à l'automate 10.1 l'affichage de l'image modifiée.

La mémoire 11.1 est ici agencée en plans à savoir un plan pour contenir une image de rendu terrain à modifier, un plan pour contenir une image en cours de modification et un plan pour contenir l'image modifiée en cours d'affichage.

L'affichage, et donc les traitements préalables effectués par les calculateurs 9.1, 9.2 sont effectués à une fréquence comprise entre 25 Hz et 100 Hz.

Le calculateur 9.1 est en outre programmé pour vérifier la cohérence de l'image de rendu terrain avec les informations d'altitudes que le calculateur 9.1 extrait directement de la base de données d'altitudes 4.

Pour ce faire, le calculateur 9.1 crée une image simplifiée de relief à partir des informations de la base de données d'altitudes 3. Cette image simplifiée se présente par exemple sous la forme d'une enveloppe basée sur un treillis filaire en trois dimensions dont les nœuds correspondent aux points enregistrés avec leurs altitudes dans la base de données d'altitudes 3 pour la zone survolée par l'avion. Le calculateur 9.1 compare l'image simplifiée et l'image transmise par la deuxième unité de traitement 6.2 pour vérifier la cohérence des deux images.

Le calculateur 9.1 de la première unité de traitement 6.1 est programmé pour, en cas d'incohérence, commander soit l'affichage des données de vol seules soit l'image simplifiée à laquelle les données de vol sont incorporées.

L'afficheur 7 est ici un afficheur haute définition au format 16/9 ou 16/10.

Bien entendu, l'invention n'est pas limitée au mode de réalisation décrit mais englobe toute variante entrant dans le champ de l'invention telle que définie par les revendications.

En particulier, d'autres informations peuvent être traitées par les unités de traitement. Les unités de traitement peuvent être reliées à une seule source de données ou aux mêmes sources de données, ou bien encore à des sources de données différentes.

En variante, le calculateur 9.1 peut être synchronisé sur la liaison DVID pour modifier à la volée l'image de rendu terrain au fur et à mesure de sa transmission au contrôleur graphique 10.1. La mémoire 10.1 ne contient alors que l'image modifiée en cours d'affichage.

Le dispositif d'affichage peut avoir une structure différente de celle décrite. Les unités de traitement peuvent être incorporées à l'afficheur ou au contraire déportées.

D'autres standards que le standard DVID pour la liaison entre les unités de traitement ou que les standards haute définition 16/9 ou 16/10 sont bien entendu utilisables.

La vérification de cohérence peut être effectuée sans recourir à une image simplifiée de relief, par exemple par comparaison de points dans l'image de rendu terrain. La vérification de cohérence peut être effectuée a priori ou a posteriori. La vérification de cohérence, bien qu'avantageuse, est facultative.

## Revendications

1. Dispositif d'affichage d'informations (2), agencé pour afficher des informations dans un cockpit d'aéronef, comportant une première unité de traitement (6.1) agencée pour être reliée à une centrale (3) fournissant des données de vol critiques que sont la vitesse et l'altitude de l'aéronef, et une deuxième unité de traitement (6.2) agencée pour être reliée à une base de données d'altitudes (4) contenant des coordonnées d'un maillage d'un territoire avec des altitudes associées et à une base de données photographiques (5) contenant des coordonnées du même maillage du même territoire avec des photographies associées, la première unité de traitement étant en outre reliée à un afficheur (7) et à la deuxième unité de traitement, la première unité de traitement et la deuxième unité de traitement comportant chacune un calculateur (9.1, 9.2) et une mémoire (11.1, 11.2), le calculateur de la deuxième unité étant agencé pour construire une image de rendu terrain à partir des informations de la base de données d'altitudes et de la base de données photographiques et la transmettre au calculateur de la première unité de traitement qui est agencé pour modifier l'image en y incorporant des informations de la centrale et pour transmettre l'image modifiée à l'afficheur.

2. Dispositif selon la revendication 1, dans lequel la mémoire (11.1) de la première unité (6.1) est organisée pour stocker une image à modifier, une image en cours de modification et une image modifiée en cours d'affichage.

3. Dispositif selon la revendication 1, dans lequel le calculateur (9.1) de la première unité (6.1) est synchronisé avec le calculateur (9.2) de la deuxième unité (6.2) pour modifier les images au fur et à mesure de leur transmission du calculateur de la deuxième unité vers le calculateur de la première unité.

4. Dispositif selon la revendication 1, dans lequel le calculateur (9.1) de la première unité de traitement (6.1) est agencé pour vérifier une cohérence de l'image transmise par la deuxième unité de traitement (6.2) avec des informations de la centrale.

5. Dispositif selon la revendication 1, dans lequel la première unité de traitement (6.1) est également reliée à la base de données d'altitudes (4) pour vérifier une cohérence de l'image fournie par la deuxième unité de traitement (6.2) et des informations issues de la base de données d'altitudes.

6. Dispositif selon la revendication 5, dans lequel le calculateur (9.1) de la première unité de traitement (6.1) agencé pour créer une image simplifiée de relief à partir des informations de la base de données d'altitudes (4) et pour comparer l'image simplifiée et l'image transmise par la deuxième unité de traitement (6.2) pour vérifier la cohérence des deux images.

7. Dispositif selon la revendication 6, dans lequel le calculateur (9.1) de la première unité de traitement (6.1) est agencé pour, en cas d'incohérence, commander l'affichage des données de vol seules ou incorporées dans l'image simplifiée.

8. Dispositif selon la revendication 1, dans lequel le calculateur (9.1) de la première unité de traitement (6.1) est agencé pour inscrire en surimpression les informations sur l'image et / ou pour créer dans l'image une fenêtre d'affichage des informations.

9. Aéronef équipé d'un dispositif selon l'une quelconque des revendications précédentes.

## Patentansprüche

1. Vorrichtung (2) zur Anzeige von Informationen, die ausgebildet ist, um Informationen in einem Cockpit eines Flugzeugs anzuzeigen, umfassend eine erste Verarbeitungseinheit (6.1), die ausgebildet ist, um mit einer Zentrale (3) verbunden zu werden, die kritische Flugdaten, welche die Geschwindigkeit und die Höhe des Flugzeugs sind, liefert, sowie eine zweite Verarbeitungseinheit (6.2), die ausgebildet ist, um mit einer Höhendatenbank (4), die Koordinaten eines Netzes eines Gebiets mit dazugehörigen Höhen enthält, und einer Datenbank (5) für fotografische Daten verbunden zu werden, die Koordinaten desselben Netzes desselben Gebiets mit dazugehörigen Fotos enthält, wobei die erste Verarbeitungseinheit ferner mit einem Anzeigegerät (7) und der zweiten Verarbeitungseinheit verbunden ist, wobei die erste Verarbeitungseinheit und die zweite Verarbeitungseinheit jeweils einen Rechner (9.1, 9.2) und einen Speicher (11.1, 11.2) umfassen, wobei der Rechner der zweiten Einheit ausgebildet ist, um ein Gelände-Render-Bild anhand der Informationen der Höhendatenbank und der Datenbank für fotografische Daten zu konstruieren und dieses an den Rechner der ersten Verarbeitungseinheit zu übertragen, der ausgebildet ist, um das Bild zu modifizieren, indem er darin Informationen der Zentrale aufnimmt, und um das modifizierte Bild an das Anzeigegerät zu übertragen.

2. Vorrichtung nach Anspruch 1, bei der der Speicher (11.1) der ersten Einheit (6.1) organisiert ist, um ein zu modifizierendes Bild, ein Bild während der Modifizierung und ein modifiziertes Bild während der Anzeige zu speichern.

3. Vorrichtung nach Anspruch 1, bei der der Rechner (9.1) der ersten Einheit (6.1) mit dem Rechner (9.2) der zweiten Einheit (6.2) synchronisiert ist, um die Bilder entsprechend ihrer Übertragung von dem Rechner der zweiten Einheit zum Rechner der ersten Einheit zu modifizieren.

4. Vorrichtung nach Anspruch 1, bei der der Rechner (9.1) der ersten Verarbeitungseinheit (6.1) ausgebildet ist, um eine Kohärenz des von der zweiten Verarbeitungseinheit (6.2) übertragenen Bildes mit Informationen der Zentrale zu verifizieren.

5. Vorrichtung nach Anspruch 1, bei der die erste Verarbeitungseinheit (6.1) ferner mit der Höhendatenbank (4) verbunden ist, um eine Kohärenz des von der zweiten Verarbeitungseinheit (6.2) gelieferten Bildes und aus der Höhendatenbank stammenden Informationen zu verifizieren.

6. Vorrichtung nach Anspruch 5, bei der der Rechner (9.1) der ersten Verarbeitungseinheit (6.1) ausgebildet ist, um ein vereinfachtes Reliefbild anhand der Informationen der Höhendatenbank (4) zu erzeugen und das vereinfachte Bild und das von der zweiten Verarbeitungseinheit (6.2) übertragene Bild zu vergleichen, um die Kohärenz der beiden Bilder zu verifizieren.

7. Vorrichtung nach Anspruch 6, bei der der Rechner (9.1) der ersten Verarbeitungseinheit (6.1) ausgebildet ist, um im Falle einer Inkohärenz die Anzeige der Flugdaten allein oder aufgenommen in das vereinfachte Bild zu steuern.

8. Vorrichtung nach Anspruch 1, bei der der Rechner (9.1) der ersten Verarbeitungseinheit (6.1) ausgebildet ist, um die Informationen als Überlagerung auf das Bild zu schreiben und/oder um in dem Bild ein Fenster zur Anzeige der Informationen zu erzeugen.

9. Luftfahrzeug, das mit einer Vorrichtung nach einem der vorhergehenden Ansprüche ausgestattet ist.

## Claims

1. An information display device (2) arranged to display information in an aircraft cockpit, the device comprising a first processor unit (6.1) arranged to be connected to a unit (3) supplying critical flight data that are the speed and the altitude of the aircraft, and a second processor unit (6.2) arranged to be connected to an altitude database (4) containing the coordinates of a mesh of a territory together with the associated altitudes, and to a photographic database (5) containing the coordinates of the same mesh of the same territory together with associated photographs, the first processor unit also being connected to a display (7) and to the second processor unit, the first processor unit and the second processor unit each comprising a computer (9.1, 9.2) and a memory (11.1, 11.2), the computer of the second unit being arranged to construct a terrain rendering image on the basis of information from the altitude database and from the photographic database, and to transmit the image to the computer of the first processor unit, which is arranged to modify the image by incorporating therein information from the unit and to transmit the modified image to the display.

2. A device according to claim 1, wherein the memory (11.1) of the first unit (6.1) is organized to store an image for modification, an image being modified, and a modified image being displayed.

3. A device according to claim 1, wherein the computer (9.1) of the first unit (6.1) is synchronized with the computer (9.2) of the second unit (6.2) to modify the images while they are being transmitted from the computer of the second processor unit to the computer of the first processor unit.

4. A device according to claim 1, wherein the computer (9.1) of the first processor unit (6.1) is arranged to verify consistency between the image transmitted by the second processor unit (6.2) and information from the unit.

5. A device according to claim 1, wherein the first processor unit (6.1) is also connected to the altitude database (4) to verify consistency between the image supplied by the second processor unit (6.2) and the information from the altitude database.

6. A device according to claim 5, wherein the computer (9.1) of the first processor unit (6.1) is arranged to create a simplified image of the relief on the basis of information from the altitude database (4) and to compare the simplified image with the image transmitted by the second processor unit (6.2) in order to verify consistency between the two images.

7. A device according to claim 6, wherein the computer (9.1) of the first processor unit (6.1) is arranged, in the event of inconsistency, to cause the flight data to be displayed on its own, or else to display the flight data incorporated in the simplified image.

8. A device according to claim 1, wherein the computer (9.1) of the first processor unit (6.1) is arranged to write the information as an overlay on the image and/or to create an information display window in the image.

9. An aircraft fitted with a device according to any preceding claim.
